# EUROPEAN PATENT SPECIFICATION

(11) **EP 0 637 521 B1**
(45) Date of publication and mention of the grant of the patent: **18.11.1998**
(21) Application number: 94112202.0
(22) Date of filing: 04.08.1994
(51) Int. Cl.: B60J 5/04

(54) **Vehicle door preassembly, door manufacturing process, and door produced thereby**
Vormontage einer Kraftfahrzeugtür, Verfahren für die Herstellung der Tür und die dadurch hergestellte Tür
Préassemblage d'une porte de véhicule, procédé pour la fabrication de la porte et porte produite selon ce procédé

(30) Priority: 06.08.1993 IT TO930592
(43) Date of publication of application: 08.02.1995
(73) Proprietor: ATOMA ROLTRA S.p.A., 86077 Pozzilli (IS) (IT)
(72) Inventor: Filippi, Aldo, I-10100 Torino (IT)
(74) Representative: Prato, Roberto

(56) References cited:
- EP-A- 0 286 836
- EP-A- 0 286 923
- EP-A- 0 336 565
- EP-A- 0 406 034
- US-A- 4 471 251

## Description

The present invention relates to a preassembly for vehicle doors in general, and motor vehicle doors in particular.

In general, a vehicle door comprises an outer panel with, in most cases, a bottom portion, and a top frame portion defining a window opening for a sliding window.

In the traditional vehicle door, the bottom portion is normally fitted with a door lock mechanism, a window regulator for operating and guiding the sliding window, and the wiring for supplying the lock mechanism and window regulator, which are subsequently concealed by an inner cover panel.

In recent times, to speed up on-line assembly, testing and revision of the door, the lock mechanism, window regulator and supply cables are preassembled off-line on a movable supporting frame to form a functional assembly which only later is fitted on-line to the bottom portion of the outer panel, followed by fitment of the window to the control slide of the window regulator and assembly of the finish cover panel.

Though widely adopted, the above assembly process still remains relatively time-consuming and expensive, mainly due to the assembly line being supplied separately, not only with the preassembly, but also with other components such as the cover panel and window, and due to the fact that neither the preassembly as described above nor the other components are normally fittable to the outer panel fully automatically, e.g. by means of robots.

EP 0 336 565 discloses a vehicle door comprising an inner and outer door panel, each of which is hinged to a vehicle body, and a door hardware which comprises a window regulator mechanism, a door latch and a door latch release handle each of which are directly connected to an outer surface of the inner door panel.

It is an object of the present invention to provide a straightforward vehicle door preassembly designed to overcome the above drawbacks and which, in particular, is fittable automatically to the outer panel.

According to the present invention, there is provided a vehicle door preassembly as defined in claim 1.

The present invention also relates to a vehicle door manufacturing process.

According to the present invention, there is provided a process for manufacturing a vehicle door as defined in claim 10.

A non-limiting embodiment of the present invention will be described by way of example with reference to the accompanying drawings, in which:
Figure 1 shows a side view of a vehicle door outer panel and, detached from the outer panel, a preferred embodiment of the preassembly according to the present invention;
Figure 2 shows a side view, from inside, of the door formed by fitting the preassembly to the outer panel.

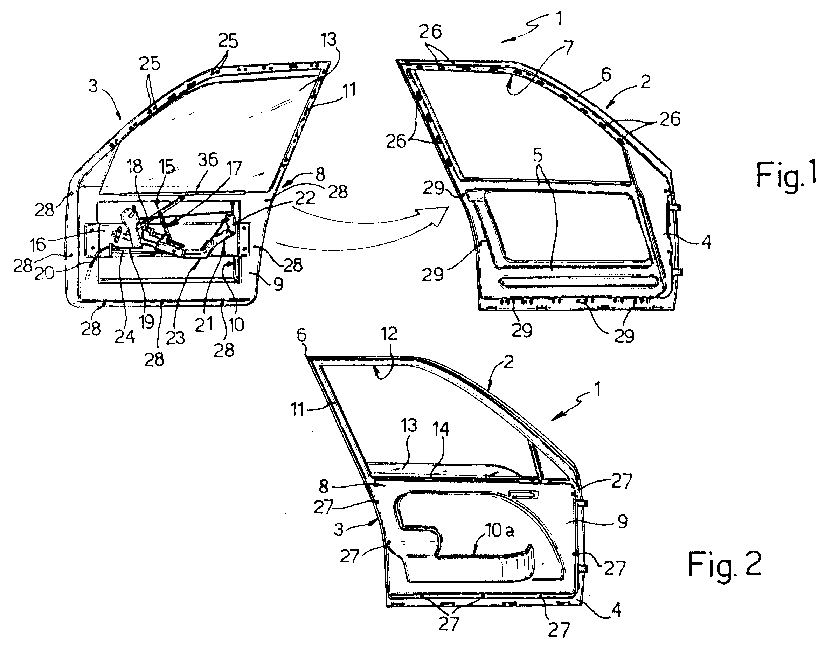

Number 1 in the accompanying drawings indicates a vehicle door, in particular a motor vehicle door, comprising a preferably metal outer panel 2, and a preassembly 3 (Figure 1) fittable to outer panel 2.

As shown in Figure 1, outer panel 2 comprises a substantially rectangular bottom portion 4 with two spaced parallel cross members 5; and a frame 6 connected integral with portion 4 with which it defines a window opening 7.

The inner surface of outer panel 2 is fitted with a cover panel 8 preferably formed in one piece from plastic material, substantially of the same shape as outer panel 2, and forming part of preassembly 3. In the example shown, panel 8 comprises a substantially rectangular bottom portion 9 presenting a central cavity 10 (Figure 1) on one side, a pocket 10a (Figure 2) on the other, and which fits on to portion 4 of outer panel 2. Panel 8 also comprises a top frame portion 11 extending in contact with frame 6 with which it defines the window opening 12 of door 1.

Window opening 12 is closed by a window 13 forming part of preassembly 3, extending between outer panel 2 and panel 8, and fitted in sliding manner to panel 8 via the interposition of a first seal 14 (Figure 2), and to outer panel 2 via a second known seal (not shown) also fitted to outer panel 2.

Window 13 is moved in relation to outer panel 2 and between an open and closed position by a known window regulator 15 forming part of preassembly 3, housed inside cavity 10, and supported inside cavity 10 on a plate 16, the opposite end portions of which are connected integral with respective intermediate portions of portion 9. More specifically, window regulator 15 comprises a slide 36 connected integral with the bottom peripheral portion of window 13 and operated by a known link drive 17. Drive 17 is in turn operated by an electric motor 18, the supply cables 19 of which are fitted to plate 16 and terminate in respective terminals connected to the terminal board of a cable assembly 20 (shown partially in Figure 1) extending towards the central portion of the vehicle. Assembly 20 is fitted to panel 8, and is preferably embedded inside panel 8 when this is formed or during assembly of preassembly 3.

As shown in Figure 1, plate 16 is also fitted with a known door lock mechanism 21 also forming part of preassembly 3 and comprising a lock 22 with a top lever for connection to the outside door handle (not shown), and a known power operated safety door lock device 23 with supply cables 24 also connected to panel 8 and connected in known manner to cable assembly 20.

As shown in Figure 1, preassembly 3 of door 1 is fitted to outer panel 2 by means of a number of elastic appendixes 25 fitted to and spaced along the inner surface of portion 11 of panel 8, and each of which positively engages a respective seat or opening 26 formed in portion 6 of outer panel 2. Preassembly 3 is also fitted to outer panel 2 by means of a number of fastening elements 27 (Figure 2) extending through respective holes 28 in a peripheral portion of portion 9 of panel 8, and positively engaging - preferably clicking inside - respective holes 29 in a peripheral portion of portion 4 of outer panel 2.

Door 1 as described above is produced by first forming preassembly 3 and then fitting it to outer panel 2. More specifically, preassembly 3 is formed by fitting window regulator 15 and lock mechanism 21 to plate 16; inserting plate 16 inside cavity 10 in panel 8 formed beforehand, for example, by molding; fitting plate 16 removably to portion 9 of panel 8; electrically connecting supply cables 19 and 24 of motor 18 and device 23 respectively to assembly 20 already embedded inside, and hence integral with, panel 8; fitting cables 19 and 24 to plate 16 or portion 9 of panel 8; and, finally, fitting window 13 to both panel 8, by fitting it on to respective seal 14, and to window regulator 15 by fitting the bottom portion of window 13 on to slide 36.

Once assembled, preassembly 3 is picked up, preferably by means of a robot fixture (not shown) or by an operator, and positioned facing outer panel 2, and more specifically in such a position that each appendix 25 corresponds with a respective seat 26, and holes 28 correspond with holes 29.

At this point, preassembly 3 is moved towards outer panel 2; panel 8 is pressed on to outer panel 2 so that appendixes 25 positively engage respective seats 26; and, still pressing panel 8 on to outer panel 2, fastening elements 27 are inserted inside respective holes 28 and driven into holes 29.

Bottom portion 9 of panel 8 is thus connected removably to portion 4 to complete the bottom portion of door 1; while top portion 11 of panel 8 is connected removably to frame 6 with which it defines a channel for window 13, and at the same time covers frame 6 to complete the top portion of door 1.

A pretested preassembly of the type described above thus provides for greatly simplifying assembly of the door and, more especially, for enabling a drastic reduction in on-line assembly, testing and revision time, by virtue of supplying the assembly line with no more than two parts, one consisting of metal outer panel 2, and the other of all the other, preassembled, working components of the door.

Also, by virtue of supplying the assembly line with only two parts which are easily connectable to each other, this may be done using fully automatic robot fixtures, thus enabling a reduction in the skilled labour still required at present for assembling known doors.

Clearly, changes may be made to door 1 as described and illustrated herein without, however, departing from the scope of the present invention. For example, panel 8 need not necessarily present portion 11 or the whole of portion 11; window 13 need not necessarily form part of the preassembly, and may be fitted to outer panel 2 in known manner and to respective slide 36 during fitment of preassembly 3 to outer panel 2; and changes may be made to elements 25 and 27 for connecting preassembly 3 to outer panel 2.

Moreover, panel 8 need not necessarily present cavity 10 or pocket 10a, and window regulator 15 and door lock mechanism 21 may be housed in a cavity formed in outer panel 2, in which case, plate 16 may be dispensed with and portion 9 may be reinforced, for example, by means of ribs.

Finally, as opposed to being embedded in panel 8, cable assembly 20 may simply be fitted to the surface of panel 8 using known fastening elements such as brackets or terminal strips screwed to or embedded in panel 8.

## Claims

1. A vehicle door preassembly (3) fittable to an outer door panel (2) presenting a bottom portion (4) and a top frame (6) defining a window opening (7); the preassembly comprising at least a door lock mechanism (21) and a window regulator (15) for operating and guiding a sliding window (13) closing the window opening (7); electric actuating means (18) (23) for at least said window regulator (15) or said lock mechanism (21) and presenting respective supply cables (19) (24); and electric connecting means interposed between said supply cables (19) (24) and a cable assembly (20) extending towards a given portion of the vehicle; the preassembly also comprising an inner cover panel (8) for covering the outer panel (2) and in turn comprising at least a bottom portion (9) fittable to said bottom portion (4) of the outer panel (2); said lock mechanism (21) and said window regulator (15) being supported by to said cover panel (8); connecting means (25,27) being provided for positively connecting said preassembly (3) to said outer panel (2), characterized in that at least said actuating means (18, 23) for said window regulator (15) and said lock mechanism (21) are fitted to a common supporting element (16) in turn fitted to said cover panel (8).

2. A preassembly as claimed in claim 1, characterized in that said door lock mechanism (21) and said window regulator (15) are fitted to the said common supporting element (16).

3. A preassembly as claimed in Claim 1 o 2, characterized in that said cover panel (8) also comprises a top frame portion (11) fittable to said top frame (6) of the outer panel (2); said window (13) being fitted in sliding manner to said top frame portion (11) and being connected to the slide (36) of the window regulator (15).

4. A preassembly as claimed in any of the foregoing Claims, characterized in that said cable assembly (20) is fitted to said cover panel (8).

5. A preassembly as claimed in any of the foregoing Claims from 1 to 4, characterized in that said cable assembly (20) is at least partially embedded in said cover panel (8).

6. A preassembly as claimed in any one of the foregoing Claims, characterized in that it also comprises a seal (14) fitted to said cover panel (8) and interposed between the cover panel (8) and said window (13).

7. A preassembly as claimed in any one of the foregoing Claims, characterized in that said connecting means (25, 27) comprise fastening means arranged along the edge of said cover panel (8).

8. A preassembly as claimed in Claim 7 characterized in that said fastening means (25) are fast-fit fastening means, and comprise a number of appendixes (25) integral with said cover panel (8) and each positively engaging a respective seat (26) formed in said outer panel (2).

9. A preassembly as claimed in Claim 7, characterized in that said cover panel (8) comprises a number of first holes (28); and said fastening means comprise an equal number of fastening elements (27), each extending through a respective said first hole (28) and positively engaging a respective second hole (29) formed in the outer panel (2).

10. A process for manufacturing a vehicle door (1) comprising an outer panel (2) presenting a bottom portion (4) and a top frame (6) defining a window opening (7); the process comprising stages consisting in forming a preassembly (3), and fitting the preassembly (3) to the outer panel (2) of the door (1); said preassembly (3) being formed using a cover panel (8) comprising at least a bottom portion (9) fittable to the bottom portion (4) of said outer panel (2), and by fitting said cover panel (8) with at least a door lock mechanism (21) and a window regulator (15) for operating and guiding a sliding window (13) closing said window opening (7); said preassembly comprising electric actuating means (18) (23) for at least said window regulator (15) or said lock mechanism (21) and presenting respective supply cables (19) (24); and electric connecting means interposed between said supply cables (19) (24) and a cable assembly (20) extending towards a given portion of the vehicle, characterized in that the formation of said preassembly (3) comprising a preliminary stage consisting in fitting at least said actuating means (18, 23) for said window regulator (15) and said lock mechanism (21) to a common supporting element (16), and subsequently fitting the common supporting element (16) to said cover panel (8).

11. A process as claimed in Claim 10, characterized in that said cover panel (8) also comprises a top frame portion (11) similar to and fittable to said top frame (6); the formation of said preassembly (3) also comprising further stages consisting in fitting said window (13) in sliding manner to said top portion (11) of the cover panel (8), and connecting the window (13) to the slide (36) of said window regulator (15).

12. A process as claimed in Claim 10 or 11, characterized in that the formation of said preassembly (3) comprises a further stage consisting in fitting said cable assembly (20) to said cover panel (8).

13. A process as claimed in Claim 12, characterized in that said cable assembly (20) is fitted to said cover panel (8) by embedding at least part of the cable assembly (20) inside the cover panel (8).

14. A process as claimed in any one of the foregoing Claims from 12 to 13, characterized in that the formation of said preassembly (3) comprises a further stage consisting in fitting said cover panel (8) with a seal (14) interposed between the cover panel (8) and said window (13).

15. A process as claimed in any one of the foregoing Claims from 10 to 14, characterized in that connection of the preassembly (3) to the outer panel (2) comprises stages consisting in positioning the cover panel (8) in relation to the outer panel (2); and pressing the cover panel (8) on to the outer panel (2) so that a number of appendixes (25) integral with and arranged along the edge of the cover panel (8) positively engage respective seats (26) formed in the outer panel (2).

16. A process as claimed in any one of the foregoing Claims from 10 to 14, characterized in that connection of the preassembly (3) to the outer panel (2) comprises stages consisting in positioning the cover panel (8) in relation to the outer panel (2); bringing the cover panel (8) into contact with the outer panel (2); and connecting the cover panel (8) to the outer panel (2) by means of a number of fastening elements (27) driven into the outer panel (2) and arranged along the edge of the cover panel (8).

17. A vehicle door (1) comprising an outer panel (2) presenting a bottom portion (4) and a top frame (6) defining a window opening (7); and a preassembly (3) fitted to the outer panel (2); characterized in that the preassembly (3) is formed as claimed in any one of the foregoing Claims from 1 to 8.

## Patentansprüche

1. Fahrzeugtür-Vormontage (3), welche an einer äußeren Türplatte (2) befestigt werden kann, welche einen unteren Abschnitt (4) und einen eine Fensteröffnung (7) definierenden oberen Rahmen (6) zeigt, wobei die Vormontage mindestens aufweist: einen Tür-Verriegelungsmechanismus (21) und eine Fenster-Reguliereinrichtung (15) zum Betätigen und Führen eines Schiebefensters (13), welches die Fensteröffnung (7) schließt; eine elektrische Betätigungseinrichtung (18) (23) für mindestens die FensterReguliereinrichtung (15) oder den Verriegelungsmechanismus (21), welche entsprechende Versorgungskabel (19) (24) zeigt; und eine elektrische Verbindungseinrichtung, die zwischen den Versorgungskabeln (19) (24) und einer Kabelanordnung (20) angeordnet ist, die sich in Richtung eines gegebenen Abschnitts des Fahrzeugs erstreckt; wobei die Vormontage auch eine innere Abdeckplatte (8) zum Abdecken der äußeren Platte (2) und wiederum mindestens einen unteren Abschnitt (9) aufweist, welcher an dem unteren Abschnitt (4) der äußeren Platte (2) befestigt werden kann; wobei der Verriegelungsmechanismus (21) und die Fenster-Reguliereinrichtung (15) von der Abdeckplatte (8) gestützt wird; wobei Verbindungseinrichtungen (25, 27) Vorgesehen sind zur formschlüssigen Verbindung der Vormontage (3) mit der äußeren Platte (2), dadurch gekennzeichnet, daß mindestens die Betätigungseinrichtung (18, 23) für die Fenster-Reguliereinrichtung (15) und der Verriegelungsmechanismus (21) an einem gemeinsamen Stützelement (16) befestigt sind, welches wiederum an der Abdeckplatte (8) befestigt ist.

2. Vormontage nach Anspruch 1, dadurch gekennzeichnet, daß der Tür-Verriegelungsmechanismus (21) und die Fenster-Reguliereinrichtung (15) an dem gemeinsamen Stützelement (16) befestigt sind.

3. Vormontage nach Anspruch 1 oder 2, dadurch gekennzeichnet, daß die Abdeckplatte (8) auch einen oberen Rahmenabschnitt (11) aufweist, der an dem oberen Rahmen (6) der äußeren Platte (2) befestigt werden kann; wobei das Fenster (13) in gleitender Weise an dem oberen Rahmenabschnitt (11) befestigt und mit dem Gleitstück (36) der Fenster-Reguliereinrichtung verbunden ist.

4. Vormontage nach einem der vorhergehenden Ansprüche, dadurch gekennzeichnet, daß die Kabelanordnung (20) an der Abdeckplatte (8) befestigt ist.

5. Vormontage nach einem der vorhergehenden Ansprüche 1 bis 4, dadurch gekennzeichnet, daß die Kabelanordnung (20) zumindest teilweise in der Abdeckplatte (8) eingebettet ist.

6. Vormontage nach einem der vorhergehenden Ansprüche, dadurch gekennzeichnet, daß sie auch eine Dichtung (14) aufweist, die an der Abdeckplatte (8) befestigt ist und zwischen der Abdeckplatte (8) und dem Fenster (13) angeordnet ist.

7. Vormontage nach einem der Vorhergehenden Ansprüche, dadurch gekennzeichnet, daß die Verbindußgseinrichtungen (25, 27) Befestigungseinrichtungen aufweisen, die entlang dem Rand der Abdeckplatte (8) angeordnet sind.

8. Vormontage nach Anspruch 7, dadurch gekennzeichnet, daß die Befestigungseinrichtung (25) eine Schnellbefestigungseinrichtung ist und eine Anzahl von Ansatzstücken (25) aufweist, die mit der Abdeckplatte (8) einstückig sind und jeweils formschlüssig in einen entsprechenden Sitz (26) eingreifen, welcher in der äußeren Platte (2) gebildet ist.

9. Vormontage nach Anspruch 7, dadurch gekennzeichnet, daß die Abdeckplatte (8) eine Anzahl von ersten Löchern (28) aufweist; und die Befestigungseinrichtungen eine gleiche Anzahl von Befestigungselementen (27) aufweisen, die sich jeweils durch ein entsprechendes erstes Loch (28) erstrecken und formschlüssig in ein zweites Loch (29) eingreifen, welches in der äußeren Platte (2) gebildet ist.

10. Verfahren zum Herstellen einer Fahrzeugtür (1) mit einer äußeren Platte (2), die einen unteren Abschnitt (4) und einen oberen Rahmen (6) zeigt, welcher eine Fensteröffnung (7) definiert; wobei das Verfahren folgende Schritte aufweist:
Bilden einer Vormontage (3) und Befestigen der Vormontage (3) an der äußeren Platte (2) der Tür (1); wobei die Vormontage (3) durch Verwenden einer Abdeckplatte (8) gebildet wird, die mindestens einen unteren Abschnitt (9) aufweist, welcher an dem unteren Abschnitt (4) der Außenplatte (2) befestigt werden kann, und durch Ausrüsten der Abdeckplatte (8) mindestens mit einem TürVerriegelungsmechanismus (21) und einer Fenster-Reguliereinrichtung (15) zum Betätigen und Führen eines Schiebefensters (13), welches die Fensteröffnung (7) schließt; wobei die Vormontage eine elektrische Betätigungseinrichtung (18) (23) für mindestens die Fenster-Reguliereinrichtung (15) oder den Verriegelungsmechanismus (21) aufweist und entsprechende Versorgungskabel (19) (24) zeigt; und einer elektrischen Verbindungseinrichtung, die zwischen den Versorgungskabeln (19) (24) und einer Kabelanordnung (20) angeordnet ist, und sich in Richtung eines gegebenen Abschnitts des Fahrzeugs erstreckt, dadurch gekennzeichnet, daß die Bildung der Vormontage (3) einen einleitenden Schritt aufweist, der darin besteht, daß zumindest die Betätigungseinrichtung (18, 23) für die Fenster-Reguliereinrichtung (15) und der Verriegelungsmechanismus (21) an einem gemeinsamen Stützelement (16) befestigt wird, und danach das gemeinsame Stützelement (16) an der Abdeckplatte (8) befestigt wird.

11. Verfahren nach Anspruch 10, dadurch gekennzeichnet, daß die Abdeckplatte (8) auch einen oberen Rahmenabschnitt (11) aufweist, der ähnlich zu dem oberen Rahmen (6) ist und an diesem befestigt werden kann, wobei die Bildung der Vormontage (3) auch weitere Schritte umfaßt, bestehend aus Befestigen des Fensters (13) in gleitender Weise an dem oberen Abschnitt (11) der Abdeckplatte (8) und Verbinden des Fensters (13) mit dem Gleitstück (36) der Fenster-Reguliereinrichtung (15).

12. Verfahren nach Anspruch 10 oder 11, dadurch gekennzeichnet, daß die Bildung der Vormontage (3) einen weiteren Schritt aufweist, bestehend darin, daß die Kabelanordnung (20) an der Abdeckplatte (8) befestigt wird.

13. Verfahren nach Anspruch 12, dadurch gekennzeichnet, daß die Kabelanordnung (20) an der Abdeckplatte (8) befestigt wird, indem mindestens ein Teil der Kabelanordnung (20) innerhalb der Abdeckplatte (8) eingebettet wird.

14. Verfahren nach einem der vorhergehenden Ansprüche 12 bis 13, dadurch gekennzeichnet, daß die Bildung der Vormontage (3) einen weiteren Schritt aufweist, bestehend aus Ausrüsten der Abdeckplatte (8) mit einer Dichtung (14), die zwischen der Abdeckplatte (8) und dem Fenster (13) angeordnet wird.

15. Verfahren nach einem der vorhergehenden Ansprüche 10 bis 14, dadurch gekennzeichnet, daß die Verbindung der Vormontage (3) mit der äußeren Platte (2) die Schritte aufweist, bestehend aus Positionieren der Abdeckplatte (8) relativ zu der äußeren Platte (2); und Drücken der Abdeckplatte (8) auf die äußere Platte (2), so daß eine Anzahl an Ansatzstücken (25), welche mit dem Rand der Abdeckplatte (8) einstückig und entlang diesem angeordnet sind, formschlüssig in entsprechende Sitze (26) eingreifen, die in der äußeren Platte (2) gebildet sind.

16. Verfahren nach einem der vorhergehenden Ansprüche 10 bis 14, dadurch gekennzeichnet, daß die Verbindung der Vormontage (3) mit der äußeren Platte (2) Schritte aufweist, die bestehen aus Positionieren der Abdeckplatte (8) relativ zu der äußeren Platte (2); in Kontakt Bringen der Abdeckplatte (8) mit der äußeren Platte (2); und Verbinden der Abdeckplatte (2) mit der äußeren Platte (2) mittels einer Anzahl an Befestigungselementen (27), die in die äußeren Platte (2) getrieben sind und entlang dem Rand der Abdeckplatte (8) angeordnet sind.

17. Fahrzeugtür (1) mit einer äußeren Platte (2), die einen unteren Abschnitt (4) und einen oberen Rahmen (6) zeigt, welcher eine Fensteröffnung (7) definiert; und einer Vormontage (3), die an der äußeren Platte (2) befestigt ist; dadurch gekennzeichnet, daß die Vormontage (3) so gebildet ist, wie es in einem der vorhergehenden Ansprüche 1 bis 8 beansprucht ist.

## Revendications

1. Préensemble de porte de véhicule (3) s'ajustant à un panneau extérieur de porte (2) présentant une partie inférieure (4) et un cadre supérieur (6) délimitant une baie de vitre (7), ce préensemble comprenant au moins un mécanisme de verrouillage de porte (21) et un lève-vitre (15) pour la manoeuvre et le guidage d'une vitre coulissante (13) fermant la baie (7), des moyens d'actionnement électriques (18) (23) pour au moins le lève-vitre (15) ou le mécanisme de verrouillage (21) et présentant des câbles d'alimentation respectifs (19) (24), et des moyens de connexion électrique interposés entre les câbles d'alimentation (19) (24) et un ensemble de câbles (20) s'étendant vers une partie donnée du véhicule, le préensemble comprenant aussi un panneau intérieur de couverture (8) destiné à couvrir le panneau extérieur (2) et comprenant lui-même au moins une partie inférieure (9) s'ajustant à la partie inférieure (4) du panneau extérieur (2), le mécanisme de verrouillage (21) et le lève-vitre (15) étant supportés par ce panneau de couverture (8), des moyens de jonction (25, 27) étant prévus pour la jonction positive du préensemble (3) au panneau extérieur (2), caractérisé par le fait qu'au moins les moyens d'actionnement électriques (18, 23) pour le lève-vitre (15) et le mécanisme de verrouillage (21) sont montés sur un élément de support commun (16) lui-même monté sur le panneau de couverture (8).

2. Préensemble selon la revendication 1, caractérisé par le fait que le mécanisme de verrouillage de porte (21) et le lève-vitre (15) sont montés sur l'élément de support commun (16).

3. Préensemble selon l'une des revendications 1 et 2, caractérisé par le fait que le panneau de couverture (8) comprend aussi une partie cadre supérieure (11) s'ajustant au cadre supérieur (6) du panneau extérieur (2), la vitre (13) étant montée de manière coulissante sur cette partie cadre supérieure (11) et jointe au coulisseau (36) du lève-vitre (15).

4. Préensemble selon l'une des revendications précédentes, caractérisé par le fait que l'ensemble de câbles (20) est monté sur le panneau de couverture (8).

5. Préensemble selon l'une des revendications précédentes 1 à 4, caractérisé par le fait que l'ensemble de câbles (20) est au moins partiellement noyé dans le panneau de couverture (8).

6. Préensemble selon l'une des revendications précédentes, caractérisé par le fait qu'il comprend aussi un joint d'étanchéité (14) monté sur le panneau de couverture (8) et interposé entre celui-ci et la vitre (13).

7. Préensemble selon l'une des revendications précédentes, caractérisé par le fait que les moyens de jonction (25, 27) comprennent des moyens de fixation placés le long du bord du panneau de couverture (8).

8. Préensemble selon la revendication 7, caractérisé par le fait que les moyens de fixation (25) sont des moyens de fixation rapide et comprennent un certain nombre d'appendices (25) faisant corps avec le panneau de couverture (8) et s'engageant chacun positivement dans un siège respectif (26) formé dans le panneau extérieur (2).

9. Préensemble selon la revendication 7, caractérisé par le fait que le panneau de couverture (8) comprend un certain nombre de premiers trous (28) et les moyens de fixation comprennent un nombre égal d'éléments de fixation (27), chacun passant par un premier trou (28) respectif et s'engageant positivement dans un deuxième trou (29) respectif fait dans le panneau extérieur (2).

10. Procédé de fabrication d'une porte de véhicule (1) comprenant un panneau extérieur (2) présentant une partie inférieure (4) et un cadre supérieur (6) délimitant une baie de vitre (7), ce procédé comprenant les étapes consistant à former un préensemble (3) et le monter sur le panneau extérieur (2) de la porte (1), ce préensemble étant formé au moyen d'un panneau de couverture (8) comprenant au moins une partie inférieure (9) s'ajustant à la partie inférieure (4) du panneau extérieur (2) et en pourvoyant ce panneau de couverture (8) d'au moins un mécanisme de verrouillage de porte (21) et d'un lève-vitre (15) pour la manoeuvre et le guidage d'une vitre coulissante (13) fermant la baie (7), le préensemble comprenant des moyens d'actionnement électriques (18) (23) pour au moins le lève-vitre (15) ou le mécanisme de verrouillage (21) et présentant des câbles d'alimentation respectifs (19) (24), et des moyens de connexion électrique interposés entre ces câbles d'alimentation (19) (24) et un ensemble de câbles (20) s'étendant vers une partie donnée du véhicule, caractérisé par le fait que la formation du préensemble (3) comprend une étape préliminaire consistant à monter au moins les moyens d'actionnement (18) (23) pour le lève-vitre (15) et le mécanisme de verrouillage (21) sur un élément de support commun (16) et ensuite monter cet élément de support commun (16) sur le panneau de couverture (8).

11. Procédé selon la revendication 10, caractérisé par le fait que le panneau de couverture (8) comprend aussi une partie cadre supérieure (11) semblable au cadre supérieur (6) et s'ajustant à celui-ci, la formation du préensemble (3) comprenant aussi d'autres étapes consistant à monter la vitre (13) de manière coulissante sur la partie supérieure (11) du panneau de couverture (8) et la joindre au coulisseau (36) du lève-vitre (15).

12. Procédé selon l'une des revendications 10 et 11, caractérisé par le fait que la formation du préensemble (3) comprend une autre étape consistant à monter l'ensemble de câbles (20) sur le panneau de couverture (8).

13. Procédé selon la revendication 12, caractérisé par le fait que l'ensemble de câbles (20) est monté sur le panneau de couverture (8) par noyage d'au moins une partie de cet ensemble (20) dans ce panneau (8).

14. Procédé selon l'une des revendications précédentes 12 et 13, caractérisé par le fait que la formation du préensemble (3) comprend une autre étape consistant à monter le panneau de couverture (8) avec un joint d'étanchéité (14) interposé entre celui-ci et la vitre (13).

15. Procédé selon l'une des revendications précédentes 10 à 14, caractérisé par le fait que la jonction du préensemble (3) au panneau extérieur (2) comprend des étapes consistant à positionner le panneau de couverture (8) par rapport au panneau extérieur (2) et serrer le panneau de couverture (8) sur le panneau extérieur (2) de façon qu'un certain nombre d'appendices (25) faisant corps avec le panneau de couverture (8) et placés le long du bord de celui-ci s'engagent positivement dans des sièges respectifs (26) formés dans le panneau extérieur (2).

16. Procédé selon l'une des revendications précédentes 10 à 14, caractérisé par le fait que la jonction du préensemble (3) au panneau extérieur (2) comprend des étapes consistant à positionner le panneau de couverture (8) par rapport au panneau extérieur (2), mettre le panneau de couverture (8) en contact avec le panneau extérieur (2) et joindre le panneau de couverture (8) au panneau extérieur (2) au moyen d'un certain nombre d'éléments de fixation (27) enfoncés dans le panneau extérieur (2) et placés le long du bord du panneau de couverture (8).

17. Porte de véhicule (1) comprenant un panneau extérieur (2) présentant une partie inférieure (4) et un cadre supérieur (6) délimitant une baie de vitre (7), et un préensemble (3) monté sur ce panneau extérieur (2), caractérisée par le fait que le préensemble (3) est formé de la manière revendiquée dans l'une quelconque des revendications précédentes 1 à 8.
